# EUROPÄISCHE PATENTSCHRIFT

(11) **EP 0 890 038 B1**
(45) Veröffentlichungstag und Bekanntmachung des Hinweises auf die Patenterteilung: **30.01.2002**
(21) Anmeldenummer: 97915253.5
(22) Anmeldetag: 09.01.1997
(51) Int. Cl.: F16D 65/16

(54) **ELEKTROMECHANISCHE BREMSVORRICHTUNG**
ELECTROMAGNETIC BRAKE SYSTEM
SYSTEME DE FREINAGE ELECTROMECANIQUE

(30) Priorität: 26.03.1996 DE 19611910
(43) Veröffentlichungstag der Anmeldung: 13.01.1999
(73) Patentinhaber: ROBERT BOSCH GMBH, 70442 Stuttgart (DE)
(72) Erfinder: SCHUMANN, Frank, D-74357 Bönnigheim (DE)
(86) Internationale Anmeldenummer: DE9700017
(87) Internationale Veröffentlichungsnummer: WO9736116

(56) Entgegenhaltungen:
- EP-A- 0 246 770
- WO-A-96/03301
- US-A- 4 596 316
- US-A- 4 804 073
- US-A- 4 858 490
- US-A- 5 090 518

## Beschreibung

### Stand der Technik

Die Erfindung betrifft eine elektromechanische Bremsbetätigungsvorrichtung, insbesondere für ein Kraftfahrzeug mit vorzugsweise einer Scheiben- oder Trommelbremse, mit den Merkmalen des Oberbegriffs des Anspruchs 1.

Aus der EP 0 372 219 B1 ist eine Bremsbetätigungsvorrichtung mit einem Elektromotor bekannt, der über ein dreistufiges Planetengetriebe und einen auf einer Abtriebswelle des Planetengetriebes drehfest angebrachten Doppelnocken eine Trommelbremse betätigt. Eine erste Getriebestufe des Planetengetriebes ist von einer kleinen auf eine große Untersetzung umschaltbar. Mit der kleinen Untersetzung kann ein Lüftspiel der Trommelbremse, d. h. ein Spalt zwischen Bremsbelägen und Bremstrommel, schnell überwunden werden. Für eine hohe Bremskraft nach Anlegen der Bremsbeläge an die Bremstrommel wird die erste Getriebestufe in ihre große Untersetzung umgeschaltet. Die bekannte Bremsbetätigungsvorrichtung hat neben ihrem hohen baulichen Aufwand den Nachteil, daß sie sich im Fehlerfall, womit ein Ausfall des Elektromotors oder seiner Stromversorgung gemeint ist, nicht mehr lösen läßt. Selbst beim Schalten der ersten Planetengetriebestufe in einen Leerlauf ist die innere Reibung des Getriebes so groß, daß die Bremsbeläge mit einer Restkraft an der Bremstrommel anliegen.

Aus der EP 0 246 770 A3 ist eine Eisenbahnbremsbetätigungsvorrichtung bekannt. Diese weist einen ersten Elektromotor zum Antrieb eines ersten Spindeltriebs auf, dessen Spindel zur Betätigung einer Bremse dient. Mit dem ersten Elektromotor und dem ersten Spindeltrieb wird das Lüftspiel der Bremse überwunden. Zum Aufbringen einer hohen Bremskraft dient ein zweiter Elektromotor, der über einen zweiten Spindeltrieb und einen einarmigen Hebel auf den ersten Spindeltrieb wirkt. Dabei ist ein Ende des Hebels schwenkbar ortsfest an der Bremsbetätigungsvorrichtung angebracht. Mit kurzem Hebelarm greift der Hebel an einer Spindelmutter des ersten Spindeltriebs an, am anderen Ende, also mit langem Hebelarm, ist der Hebel schwenkbar an einer Spindelmutter des zweiten Spindeltriebs angelenkt. Durch eine Verschiebung der Spindelmutter des zweiten Spindeltriebs wird der Hebel verschwenkt und dadurch der gesamte erste Spindeltrieb mitsamt dem ersten Elektromotor verschoben, wobei das Hebelarmverhältnis eine Kraftverstärkung bewirkt. Der zweite Elektromotor bringt also über den zweiten Spindeltrieb und den Hebel die Bremskraft auf.

Diese Eisenbahnbremsbetätigungsvorrichtung hat den Nachteil, daß ihr Aufbau sehr aufwendig ist und viel Bauraum benötigt. Sie ist daher nicht zur Anbringung an einem Rad eines Kraftfahrzeugs geeignet und insbesondere nicht in einer Kraftfahrzeugfelge unterbringbar. Desweiteren würde sie durch ihr hohes Gewicht die ungefederten Massen eines Kraftfahrzeugs in einem Maße erhöhen, das die Fahreigenschaften des Fahrzeugs spürbar verschlechtern würde.

Aus der US 4 596 316 ist eine elektromechanische Bremsbetätigungsvorrichtung der gattungsgemäßen Art bekannt, bei der wenigstens zwei Elektromotoren gemeinsam sowie gleichwirkend einen Planetenantrieb durch Angriff am Planetenräder einhüllenden Hohlrad antreiben. Die Elektromotoren sind aufgrund ihrer geringen Größe konstruktiv günstig anzuordnen; sie ersetzen also einen einzigen, erheblichen Bauraum beanspruchenden Motor.

### Vorteile der Erfindung

Die erfindungsgemäße Bremsbetätigungsvorrichtung mit den Merkmalen des Anspruchs 1 weist einen Differentialantrieb auf, der Antriebsbewegungen zweier Elektromotoren zur Bremsbetätigung einander überlagert. Durch die Überlagerung der Antriebsbewegungen wird die Betätigungsgeschwindigkeit variabel: Je nach Drehrichtung addieren oder subtrahieren sich die Antriebsgeschwindigkeiten der beiden Elektromotoren.

Die Bremsbetätigungsvorrichtung hat den Vorteil, daß sie sich kompakt und leicht aufbauen läßt und dadurch für eine Anbringung an einem Fahrzeugrad eines Kraftfahrzeugs vollständig oder zumindest teilweise innerhalb einer Fahrzeugfelge eignet. Weiterer Vorteil ist eine erzielbare Gewichtsreduzierung. Zusätzlich belastet sie eine Stromversorgung geringer (geringere Bordnetzbelastung). Durch Antrieb mit beiden Motoren läßt sich das Lüftspiel der Bremse schnell überwinden und die Bremse auch schnell wieder lösen (Dynamikgewinn).

Durch Antrieb des Differentialantriebs mit nur einem Elektromotor, und zwar mit dem Elektromotor, der die größere Untersetzung zur Bremsbetätigung aufweist, läßt sich eine hohe Bremskraft erzielen. Weiterer Vorteil ist die Redundanz der erfindungsgemäßen Bremsbetätigungsvorrichtung insbesondere bei Anschluß der beiden Elektromotoren an voneinander unabhängige Stromversorgungen: Bei Ausfall eines Elektromotors oder seiner Stromversorgung, und selbst für den Fall, daß ein Elektromotor mechanisch blockiert, läßt sich die erfindungsgemäße Bremsbetätigungsvorrichtung vollständig lösen bis ein vorgesehenes Lüftspiel erreicht ist.

Des weiteren kann bei Ausfall eines Elektromotors mit dem anderen Elektromotor noch eine Bremskraft aufgebaut werden, die allerdings je nach Auslegung der Bremsbetätigungsvorrichtung und davon abhängig, welcher Elektromotorr ausfällt, unter Umständen nur einen Teil einer maximalen Bremskraft erreicht.

Die Unteransprüche betreffen vorteilhafte Ausgestaltungen und Weiterbildungen der im Anspruch 1 angegebenen Erfindung.

### Zeichnung

Die Erfindung wird nachfolgend anhand eines in der Zeichnung dargestellten Ausführungsbeispiels näher erläutert. Es zeigen:
Figur 1 eine erste Ausführungsform der Erfindung,
Figur 2 eine zweite Ausführungsform der Erfindung, und
Figur 3 eine schematisierte Darstellung des Differentialantriebs der in Figur 2 dargestellten Ausführungsform der Erfindung.

### Beschreibung der Ausführungsbeispiele

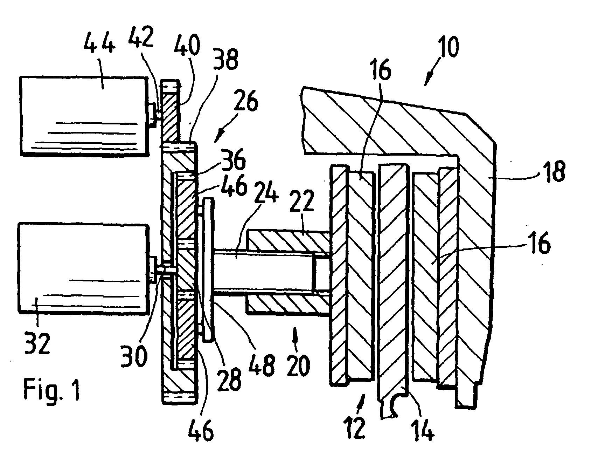

Die in Figur 1 dargestellte, insgesamt mit 10 bezeichnete, erfindungsgemäße elektromechanische Bremsvorrichtung weist eine Scheibenbremse 12 mit einer Bremsscheibe 14 und zwei Bremsbelägen 16 auf. Von der Bremsscheibe 14 ist nur ein Bruchstück am Außenumfang dargestellt. Die Bremsbeläge 16 sind in an sich bekannter Weise in einem Schwimmsattel 18 aufgenommen, von dem in der Zeichnung nur ein Abschnitt dargestellt ist.

Zum Andrücken der Bremsbeläge 16 an die Bremsscheibe 14 weist die erfindungsgemäße Bremsvorrichtung 10 einen Spindeltrieb 20 auf, dessen Gewindemutter 22 drehfest an einem der beiden Bremsbeläge 16 anliegt. Eine Spindel 24 des Spindeltriebs 20 ist mit einem Planetengetriebe 26 rotierend antreibbar. Der Spindeltrieb 20 setzt die rotierende Antriebsbewegung in eine Linearbewegung zum Andrücken des in Figur 1 links dargestellten Bremsbelags 16 gegen die Bremsscheibe 14 um. Der in Figur 1 rechts dargestellte Bremsbelag 16 wird durch eine Reaktionskraft über den Schwimmsattel 18 gegen die gegenüberliegende Seite der Bremsscheibe 14 gedrückt. Durch entgegengesetzte Rotation der Spindel 24 wird die Scheibenbremse 12 wieder gelöst.

Das Planetengetriebe 26 zum Antreiben der Spindel 24 bildet einen Differentialantrieb: Sein Sonnenrad 28 ist drehfest auf einer Welle 30 eines ersten Elektromotors 32 angebracht. Ein Hohlrad 34 des Planetengetriebes 26 weist neben der üblichen Innenverzahnung 36 eine Außenverzahnung 38 auf. Die Außenverzahnung 38 kämmt mit einem Zahnrad 40, das drehfest auf einer Welle 42 eines zweiten Elektromotors 44 angebracht ist. Wie bekannt kämmen drei oder mehr Planetenräder 46 mit der Innenverzahnung 36 des Hohlrades 34 und mit dem Sonnenrad 28 (in Figur 1 sind zwei Planetenräder 46 in die Zeichenebene gedreht dargestellt). Die Planetenräder 46 sind drehbar an einem Planetenträger 48 gelagert, der drehfest mit der Spindel 24 des Spindeltriebs 20 verbunden ist.

Das den Differentialantrieb bildende Planetengetriebe 26 überlagert die beiden rotierenden Antriebsbewegungen der Elektromotoren 32, 44 einander und überträgt sie auf den Planetenträger 48. Ein schnelles Zuspannen der Scheibenbremse 12 erfolgt zunächst vorzugsweise mit beiden Elektromotoren 32, 44 gemeinsam oder auch mit dem Elektromotor 32, 44, der das kleinere Untersetzungsverhältnis zum Planetenträger 48 hat, also die Spindel 24 des Spindeltriebs 20 schneller antreibt. Das schnelle Zuspannen erfolgt zur Überwindung des Lüftspiels bis beide Bremsbeläge 16 an der Bremsscheibe 14 anliegen. Anschließend erfolgt das Zuspannen der Scheibenbremse 12 zur Bremskrafterzeugung mit dem Elektromotor 32, 44, der das größere Untersetzungsverhältnis auf den Planetenträger 48 aufweist, also das größere Drehmoment an der Spindel 24 des Spindeltriebs 20 und damit die größere Bremskraft aufbringt. Der andere Elektromotor 44, 32 wird abgeschaltet und hält das Zahnrad 40 bzw. das Sonnenrad 28 drehfest. Welcher Elektromotor 32, 44 das größere Untersetzungsverhältnis zum Planetenträger 48 aufweist, ist abhängig von der Auslegung des Planetengetriebes 26 und vom Zahnrad 40 des zweiten Elektromotors 44.

Mit der in Figur 1 dargestellten, erfindungsgemäßen Bremsvorrichtung läßt sich also das Lüftspiel sehr schnell überwinden und anschließend eine hohe Bremskraft aufbringen. Gelöst wird die Scheibenbremse 12 durch entgegengesetzten Antrieb wie beim Zuspannen wahlweise mit einem oder mit beiden Elektromotoren 32, 44.

Durch Verwendung zweier Elektromotoren 32, 44 läßt sich die Scheibenbremse 12 - insbesondere wenn beide Elektromotoren 32, 44 an voneinander unabhängige Stromversorgungen angeschlossen sind - auch im Fehlerfall, d. h. bei Ausfall eines der beiden Elektromotoren 32, 44, vollständig lösen, so daß Lüftspiel zwischen den Bremsbelägen 16 und der Bremsscheibe 14 besteht und sich die Bremsscheibe 14 frei drehen kann. Auch ein Zuspannen der Scheibenbremse 12 ist mit einem Elektromotor 32, 44 möglich, jedoch eventuell nicht mit maximaler Bremskraft, so daß auch im Fehlerfall eine Bremswirkung vorhanden ist.

Die beiden Elektromotoren 32, 44 sind elektronisch kommutierte Motoren, die die Möglichkeit bieten, den Drehwinkel ihrer Wellen 30, 42 zu ermitteln. Durch Lösen der Scheibenbremse 12 mit einer bestimmten Anzahl von Umdrehungen der Wellen 30, 42 läßt sich ein definiertes Lüftspiel zwischen den Bremsbelägen 16 und der Bremsscheibe 14 einstellen unabhängig von einer Abnutzung der Bremsbeläge 16.

Darüber hinaus hat die erfindungsgemäße Bremsvorrichtung gemäß Figur 1 die Funktion einer Feststellbremse: Der Spindeltrieb 20 und das Planetengetriebe 26 bilden ein sog. Sperrgetriebe. Dies bedeutet, ein lineares Verschieben der Spindelmutter 22 zum Zuspannen und Lösen der Scheibenbremse 12 ist durch rotierenden Antrieb des Hohlrads 34 über das Zahnrad 40 des zweiten Elektromotors 44 oder des Sonnenrads 28 möglich. Dagegen läßt sich die Spindelmutter 22 nicht beispielsweise durch die Spannkraft der Scheibenbremse 12 vom in Figur 1 links dargestellten Bremsbelag 16 verschieben. Wird die Bremsvorrichtung 10 zugespannt und werden anschließend die beiden Elektromotoren 32, 44 abgeschaltet, bleibt die Bremskraft der Scheibenbremse 12 bestehen.

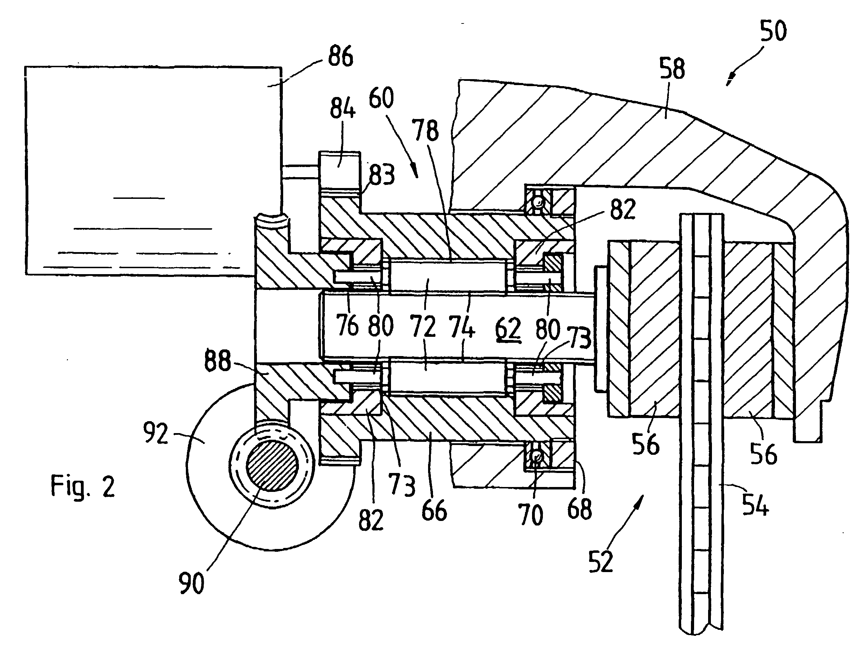

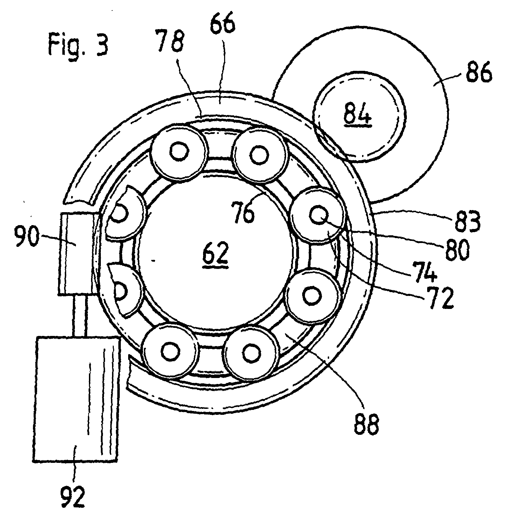

Figur 2 zeigt ein zweites Ausführungsbeispiel einer erfindungsgemäßen, elektromechanischen Bremsvorrichtung, die insgesamt mit 50 bezeichnet ist. Figur 3 zeigt schematisiert und mit abweichenden Durchmesser- und Übersetzungsverhältnissen einen Differentialantrieb der zweiten Auführungsform der Erfindung. Die Bremsvorrichtung 50 weist, ebenso wie die in Figur 1 dargestellte Bremsvorrichtung 10 als Bremse eine Scheibenbremse 52 mit einer Bremsscheibe 54 und einem Paar Bremsbelägen 56 auf, die in Figur 3 in an der Bremsscheibe 54 anliegender Stellung dargestellt sind. Die Bremsbeläge 56 sind in einem nur bereichsweise dargestellten Schwimmsattel 58 aufgenommen.

Als Differential- und Planetenantrieb weist die Bremsvorrichtung 50 einen Rollengewindetrieb 60 auf, dessen Spindel 62 zur Betätigung der Scheibenbremse 52 gegen einen der beiden Bremsbeläge 56 drückbar ist. Der Rollengewindetrieb 60 weist eine zur Spindel 62 konzentrische Spindelmutter 66 mit beispielsweise 4, 5 oder 6 Gewindegängen auf, die drehbar im Schwimmsattel 58 gelagert ist und sich über einen auf sie aufgeschraubten Gewindering 68 und ein zweites Axialkugellager 70 in axialer Richtung gegen den Schwimmsattel 58 abstützt.

In einem zylindrischen Zwischenraum zwischen der Spindel 62 und der Spindelmutter 66 sind im Ausführungsbeispiel acht eingängige Gewinde-Planetenrollen 72 angeordnet, deren Gewinde 74 mit einem Gewinde 76 der Spindel 62 und einem Innengewinde 78 der Spindelmutter 66 in Eingriff stehen. Der Gewindesteigungswinkel der Planetenrollen 72 stimmt mit dem der Spindelmutter 66 überein, so daß sich die Planetenrollen 72 beim Abwälzen in der Spindelmutter 66 axial nicht verschieben. Um korrektes Abwälzen der Planetenrollen 72 in der Spindelmutter 66 sicherzustellen, weisen wisen die Planetenrollen 72 an ihren Enden Verzahnungen 73 auf, die mit innenverzahnten Ringen 82 kämmen, die drehfest in die Spindelmutter 66 eingesetzt sind.

Die Planetenrollen 72 weisen mit ihnen einstückige Lagerzapfen 80 auf, die axial von ihren Stirnenden abstehen. Mit den Lagerzapfen 80 sind die Planetenrollen 72 in zwei kreisringförmigen Planetenträgern 87, 88 um ihre eigene Achse drehbar gelagert. Die Planetenträger 87, 88 sind drehbar in der Spindelmutter 66 gelagert. Durch rotierenden Antrieb der Spindelmutter 66 oder eines der beiden Planetenträger 88 sind die Planetenrollen 72 wie die Planetenräder eines Planetengetriebes zu einer umlaufenden Bewegung um die Spindel 62 antreibbar, während der sie zugleich um ihre eigene Achse drehen und auf der Spindel 62 und in der Spindelmutter 66 abwälzen, jedoch keine Axialbewegung ausfürhen. Aufgrund der in Eingriff stehenden Gewinde 74, 76, 78 der Spindelmutter 66, der Planetenrollen 72 und der Spindel 62 wird ein rotierender Antrieb der Spindelmutter 66 oder des Planetenträgers 88 in eine Axialbewegung der Spindel 62 zum Zuspannen und Lösen der Scheibenbremse 52 umgesetzt.

Zum rotierenden Antrieb weist die Spindelmutter 66 einen Zahnkranz 83 auf, mit dem ein Zahnrad 84 eines ersten Elektromotors 86 kämmt.

Zum rotierenden Antrieb des-in Figur 2 links dargestellten Planetenträgers 88 ist dieser als Zahnrad 88 ausgebildet, mit dem eine Antriebsschnecke 90 eines zweiten Elektromotors 92 in Eingriff steht.

Durch die Abwälzbewegung der Planetenrollen 72 auf der Spindel 62 und in der Spindelmutter 66 ist der Rollengewindetrieb 60 sehr reibungsarm und hat einen hohen Wirkungsgrad. Durch eine kleine Steigung der Gewinde 74, 76, 78 der Planetenrollen 72, der Spindel 62 und der Spindelmutter 66 läßt sich ein kleines Drehmoment an der Spindelmutter 66 oder am Planetenträger 88 über die Planetenrollen 72 in eine große Verschiebekraft an der Spindel 62 umsetzten, die zugleich die Spannkraft der Scheibenbremse 52 ist.

Der Rollengewindetrieb 60 stellt einen Differentialantrieb nach Art eines Planetengetriebes dar, der die rotierenden Antriebsbewegungen der Elektromotoren 86, 92 einander überlagert. Zugleich setzt der Rollengewindetrieb 60 die Drehbewegung in eine Linearbewegung zum Zuspannen und Lösen der Scheibenbremse 52 um. Der Rollengewindetrieb 60 kombiniert also den Spindeltrieb 20 und das Planetengetriebe 26 der in Figur 1 dargestellten, ersten Ausführungsform der Erfindung. Durch diese Integration des Differentialantriebs und der Umsetzung einer drehenden Antriebsbewegung in eine Linearbewegung mit dem Rollengewindetrieb 60 läßt sich eine kompakte und leichte Bremsvorrichtung 50 mit hohem Wirkungsgrad realisieren.

Das Überwinden des Lüftspalts beim Zuspannen der Scheibenbremse 52 erfolgt vorzugsweise schnell mit beiden Elektromotoren 86, 92. Zum Aufbringen der Bremskraft nach Überwindung des Lüftspiels wird der Elektromotor 86, 92 angetrieben, der das größere Untersetzungsverhältnis zur Spindel 62 aufweist, der andere Elektromotor 92, 86 wird stillgesetzt. Das Untersetzungsverhältnis ist abhängig von der Auslegung des Rollengewindetriebs 60, d. h. von den Durchmessern der Spindel 62, der Planetenrollen 72 und dem Innengewindedurchmesser der Spindelmutter 66, der Gewindesteigung sowie vom Untersetzungsverhältnis des ersten Elektromotors 86 auf die Spindelmutter 66, das durch die Durchmesser des Zahnkranzes 83 der Spindelmutter 66 und des Zahnrades 84 des ersten Elektromotors 86 bestimmt ist bzw. vom Untersetzungsverhältnis des zweiten Elektromotors 92 auf den Planetenträger 88, das von der Steigung der Schnecke 90 und dem Durchmesser des als Zahnrad ausgebildeten Planetenträgers 88 bestimmt ist. Im Ausführungsbeispiel dient der zweite Elektromotor 92 zum Aufbringen der Bremskraft. Das Lösen der Scheibenbremse 52 ist mit beiden Elektromotoren 86, 92 möglich und somit auch im Fehlerfall bei Ausfall eines der beiden Elektromotoren 86, 92 voll gewährleistet. Des weiteren ist die Bremsvorrichtung 50 ebenso wie die in Figur 1 dargestellte Bremsvorrichtung 10 als Feststellbrems verwendbar, da der Rollengewindetrieb 60 ein Sperrgetriebe darstellt und somit eine aufgebrachte Bremskraft bei stillgesetzten Elektromotoren 86, 92 bestehen bleibt.

Die beiden Elektromotoren 86, 92 sind elektronisch kommutiert, um beim Lösen der Scheibenbremse 52 ein definiertes Lüftspiel zwischen den Bremsbelägen 56 und der Bremsscheibe 54 unabhängig von einer Abnutzung der Bremsbeläge 56 einstellen zu können, wie dies zur ersten, in Figur 1 dargestellten Ausführungsform der Erfindung beschrieben ist.

Als Spindeltrieb 20 kann in der in Figur 1 dargestellten ersten Ausführungsform der Erfindung auch ein Rollengewindetrieb wie in der zweiten, in Figur 2 dargestellten Ausführungsform der Erfindung, oder ein sonstiges an sich bekanntes Getriebe, das eine Drehbewegung in eine Linearbewegung umsetzt, Verwendung finden. Anstelle der Spindelmutter 22 kann in Figur 1 auch die Spindel 24 gegen den Bremsbelag 16 drücken und die Spindelmutter 22 vom Planeterigetriebe 26 rotierend antreibbar sein. Sinngemäß kann in Figur 2 die Spindelmutter 66 gegen den Bremsbelag 56 drücken und die Spindel 62 rotierend antreibbar ausgebildet sein.

## Patentansprüche

1. Elektromechanische Bremsbetätigungsvorrichtung (10,50) für eine Fahrzeugbremse (12, 52), mit zwei Elektromotoren (32, 44; 86, 92), die einen Planetenantrieb (26, 60) antreiben, **dadurch gekennzeichnet, daß** der Planetenantrieb (26, 60) ein Differentialantrieb ist, wobei die zwei Elektromotoren (32, 44; 86, 92), deren Antriebsbewegungen zur Bremsbetätigung einander überlagen, wahlweise jeweils einzeln oder gemeinsam den Differentialantrieb antreiben.

2. Bremsbetätigungsvorrichtung nach Anspruch 1, **dadurch gekennzeichnet, daß** der Differntialantrieb ein Planetengetriebe (26) ist.

3. Bremsbetätigungsvorrichtung nach Anspruch 2, **dadurch gekennzeichnet, daß** die Bremsbetätigungsvorrichtung (10) einen Spindeltrieb (20), insbesondere einen Rollengewindetrieb aufweist, der eine rotierende Antriebsbewegung des Planetengetriebes (26) in eine lineare Bewegung zur Betätigung der Bremse (12) umwandelt.

4. Bremsbetätigungsvorrichtung nach Anspruch 1, **dadurch gekennzeichnet, daß** der Differentialantrieb ein Rollengewinde (60) ist, dessen Spindelmutter (66), Planetenträger (88) oder Spindel (62) von einem der beiden Elektromotoren (86, 92) und ein anderes der aufgezählten Bauelemente (66, 88, 62) des Rollengewindetriebs (60) vom anderen Elektromotor (92, 86) antreibbar ist.

5. Bremsbetätigungsvorrichtung nach Anspruch 1, **dadurch gekennzeichnet, daß** einer oder beide Elektromotoren (32, 44; 86, 92) elektronisch kommutierte Motoren sind.

## Claims

1. Electromechanical brake activation device (10, 50) for a vehicle brake (12, 52) having two electric motors (32, 44; 86, 92) which drive a planetary drive (26, 60), **characterized in that** the planetary drive (26, 60) is a differential drive, the two electric motors (32, 44; 86, 92) whose drive movement for activating the brakes are superimposed on one another optionally each drive a differential drive individually or jointly.

2. Brake activation device according to Claim 1, **characterized in that** the differential drive is a planetary gear mechanism (26).

3. Brake activation device according to Claim 2, **characterized in that** the brake activation device (10) has a spindle drive (20), in particular a rolling screw drive which converts a rotating drive movement of the planetary gear mechanism (26) into a linear movement for activating the brake (12).

4. Brake activation device according to Claim 1, **characterized in that** the differential drive is a rolling screw (60) whose spindle nut (66), planetary carrier (88) or spindle (62) can be driven by one of the two electric motors (86, 92), and another one of the mentioned components (66, 88, 62) of the rolling screw drive (60) can be driven by the other electric motor (92, 86).

5. Brake activation device according to Claim 1, **characterized in that** one or both electric motors (32, 44; 86, 92) are electronically commutated motors.

## Revendications

1. Dispositif électromécanique d'actionnement de frein (10, 50) pour un frein d'automobile (12, 52), comportant deux moteurs électriques (34, 44; 86, 92) entraînant un entraînement planétaire (26, 60),
**caractérisé en ce que**
l'entraînement planétaire (26, 60) est un entraînement différentiel, et les deux moteurs électriques (32, 44 ; 86, 92) dont les mouvements se superposent pour actionner le frein, entraînent à volonté chaque fois individuellement ou en commun, l'entraînement différentiel.

2. Dispositif selon la revendication 1,
**caractérisé en ce que**
l'entrainement différentiel est un engrenage planétaire (26).

3. Dispositif selon la revendication 2,
**caractérisé en ce que**
le dispositif d'actionnement (10) présente un entraînement à broche filetée (20), en particulier un entraînement fileté à galets, qui transforme un mouvement rotatif de l'entraînement planétaire (26) en un mouvement linéaire pour actionner le frein (12).

4. Dispositif selon la revendication 1,
**caractérisé en ce que**
l'entraînement différentiel est un entraînement fileté à galets (60) dont l'écrou de broche (66), le porte-satellites (88) ou la broche filetée (62) peut être entraîné par un des deux moteurs électriques (86, 92) tandis qu'un autre des éléments cités (66, 88, 62) de l'entraînement (60) peut être entraîné par l'autre moteur électrique (92, 86).

5. Dispositif selon la revendication 1,
**caractérisé en ce que**
l'un des deux moteurs électriques (32, 44 ; 86, 92) est, ou encore les deux moteurs sont à commutation électronique.
